Europäisches Patentamt

European Patent Office

Office européen des brevets

(11) Veröffentlichungsnummer: **0 328 941**

**A1**

(12) **EUROPÄISCHE PATENTANMELDUNG**

(21) Anmeldenummer: **89101739.4**

(22) Anmeldetag: **01.02.89**

(51) Int. Cl.⁴: **H02M 7/521 , H03K 17/08**

(30) Priorität: **16.02.88 DE 3804808**

(43) Veröffentlichungstag der Anmeldung:
**23.08.89 Patentblatt 89/34**

(84) Benannte Vertragsstaaten:
**CH DE FR GB IT LI SE**

(71) Anmelder: **Siemens Aktiengesellschaft**
**Wittelsbacherplatz 2**
**D-8000 München 2(DE)**

(72) Erfinder: **Frankenberg, Wolfgang, Dipl.-Ing.**
**Anderlohrstrasse 25**
**D-8520 Erlangen(DE)**
Erfinder: **Laber, Hans, Dipl.-Ing.**
**Schwedlerstrasse 31**
**D-8520 Erlangen(DE)**
Erfinder: **Weschta, Alois, Dr.**
**Hutweide 35**
**D-8520 Buckenhof(DE)**

(54) **Verfahren und Einrichtung zum Kommutieren des Stromes zwischen abschaltbaren Ventilzweigen eines Stromrichtergerätes.**

(57) Die Erfindung betrifft den Betrieb im Bereich natürlicher Kommutierung bei einer Brückenschaltung mit absperrbaren Ventilzweigen beim Kommutieren eines eingeprägten Stromes vom abgebenden Ventilzweig auf einen übernehmenden Ventilzweig einer Brückenhälfte zu vermeiden, daß im abgebenden Ventilzweig ein abreißender Rückstrom über die Induktivitäten der Ventilbeschaltung eine Überspannung in Rückwärtsrichtung erzeugt, ist vorgesehen, den abgebenden Ventilzweig über den Steuereingang des Ventils zunächst abzuschalten und den übernehmenden Ventilzweig erst einzuschalten; wenn das abgebenden Ventil praktisch stromlos ist. In der Zwischenzeit kann der Strom auf die Ventilbeschaltung des abgebenden Ventils kommutieren und dort eine positive Spannung erzeugen, so daß ein Rückstrom und seine gefährlichen Folgen praktisch vermieden werden können.

FIG 4

# Verfahren und Einrichtung zum Kommutieren des Stromes zwischen abschaltbaren Ventilzweigen eines Stromrichtergerätes

Die Erfindung betrifft ein Verfahren zum Kommutieren eines eingeprägten Stromes zwischen Ventilzweigen eines Stromrichtergerätes, dessen Ventilzweige je eine Halbleiter-Ventileinrichtung mit einer Ventilbeschaltung aufweisen, die abschaltbar und in Rückwärtsrichtung sperrfähig ist. Die Vorwärtsrichtung eines derartigen Ventilzweiges ist durch dessen Anordnung im Stromrichtergerät derart gegeben, daß ein Stromfluß nur in dieser Richtung möglich sein soll. In der entgegengesetzten Richtung ("Rückwärtsrichtung") soll der Ventilzweig sperren, was bei einem symmetrisch sperrenden GTO (d.h. einem GTO, der bei Ansteuerung mit einem Abschaltsignal unabhängig von der Polarität der Anoden/Kathoden-Spannung sperrend ist) von Natur aus gegeben ist und im Falle eines Transistors oder eines asymmetrisch sperrenden GTO's (d.h. eines GTO's, der zwar bei positiver Anoden/Kathoden-Spannung einen Strom abzuschalten vermag, jedoch bei umgekehrter Spannungspolarität kein Sperrvermögen besitzt) durch die Reihenschaltung mit einer Diode erreicht werden kann. Zum Kommutieren des Stromes wird die Ventileinrichtung des stromabgebenden Ventilzweiges abgeschaltet und die Ventileinrichtung des übernehmenden Ventilzweiges eingeschaltet.

Werden Brückenschaltungen mit derartigen abschaltbaren und in Rückwärtsrichtung sperrfähigen Ventilzweigen im Bereich natürlicher Kommutierung betrieben, so genügt an sich die Einschaltung des übernehmenden Ventilzweiges, wobei der abgebende Halbleiter-Ventilzweig mit negativer Anoden/Kathoden-Spannung beaufschlagt wird und erlischt. Dabei bildet sich zunächst ein Rückstrom aus, der anschließend mit einer steilen Flanke abreißt. Dabei entsteht aber eine Überspannung, die von der para sitären Induktivität der Beschaltung abhängig ist und so hohe Werte annehmen kann, daß das Ventil gefährdet ist.

Um diese Gefährdung zu vermeiden, kann eine von üblichen Thyristorschaltungen bekannte, besonders niederohmig und induktivitätsarm ausgeführte Ventilbeschaltung eingesetzt werden, die aber dann das Ventil beim Einschalten durch einen steilen Stromstoß belastet.

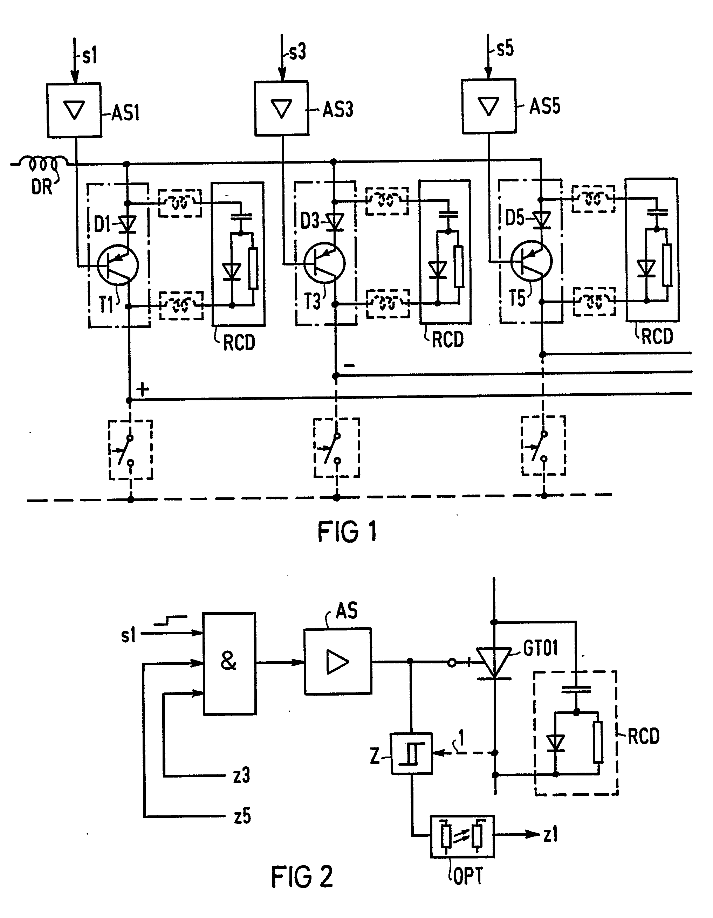

In FIG 1 ist als bevorzugtes Ausführungsbeispiel eine Hälfte einer Brückenschaltung dargestellt, der über die Drossel DR ein vorgegebener, praktisch konstanter Gleichstrom eingeprägt ist und die z.B. drei Brückenzweige mit je einer Ventileinrichtung enthält, wobei diese Ventileinrichtungen aus den Transistoren T1, T3, T5 mit den Reihendioden D1, D3, D5 besteht. Ansteuerschaltungen AS1, AS3, AS5 bilden jeweils aus entsprechenden Steuersignalen s1, s3, s5 durch Verstärkung und Pulsformung die Steuerspannungen für die Steueranschlüsse der Ventile. Parallel zu der Transistor-Dioden-Reihenschaltung ist jeweils ein RCD-Netzwerk geschaltet, das jedoch teilweise erhebliche parasitäre Induktivitäten aufweist, wie in FIG 1 angedeutet ist. Ansteuerschaltung und RCD-Schutzschaltung sind handelsüblich und z.B. aus Appendix 2 zu "Thyristor Applications Notes" AN-315 (USA, 1982) der Firma "International Rectifier" bekannt.

Solange das Ventil T1 bei gesperrten Ventilen T3 und T5 Strom führt, liegt die Spannung des Gleichspannungsanschlusses P bis auf die Durchtrittsspannung des Ventilzweiges am Drehstromanschluß R der Brückenschaltung. Wird nun bei der eingezeichneten Polarität der Drehstromanschlüsse über entsprechende Ansteuersignale s1 und s3 gleichzeitig der Ventilzweig T3 eingeschaltet und das Ventil T1 gesperrt, so übernimmt das Ventil T3 den Strom, am Ventil T1 kommt es jedoch zu einem Rückstrom und zu einer Umpolung der Spannungen in der Ventilbeschaltung. Reißt dieser Rückstrom ab, so erzeugen die Streuinduktivitäten eine hohe Spitze der jetzt negativen Anoden/Kathoden-Spannung des Venils T1, das dadurch gefährdet wird.

Aufgabe der Erfindung ist es, durch einen möglichst einfachen Eingriff in die Schaltung bzw. die Steuerung der Ventile diese Gefährdung zu vermeiden.

Diese Aufgabe wird gelöst durch ein Verfahren mit den Merkmalen des Anspruches 1. Ein entsprechendes Stromrichtergerät mit den Merkmalen des Anspruches 7 weist demnach eine derartige Gefährdung nicht auf.

Vorteilhafte Weiterbildungen der Erfindung sind in den Unteransprüchen gekennzeichnet.

Die Erfindung geht von der Erkenntnis aus, daß im stromabgebenden Halbleiterventilzweig der Rückstrom und die damit verbundene gefährliche Gegenspannung nur dann auftritt, wenn der stromabgebende Ventilzweig bei einer negativen Ventilspannung in den Sperrzustand übergeht. Diese negative Ventilspannung entsteht also immer dann, wenn das stromübernehmende Ventil zunächst bei positiver Anodenspannung gesperrt war und zur Übernahme des Stromes eingeschaltet wird, solange das abgebende Ventil noch leitet. Der Rückstrom tritt jedoch nicht auf, wenn das stromabgebende Ventil über seine Steuerspannung so abgeschaltet wird, daß zunächst eine positive Anodenspannung an diesem Ventil auftritt. Wird anschließend, d.h. erst nachdem der Strom durch das stromabgebende Ventil deutlich reduziert ist, das stromübernehmende Ventil gezündet, so kann eine am nunmehr gesperrten stromabgebenden Ventil auftretende negative Anodenspannung keine wesentliche Gefährdung mehr hervorrufen.

Demnach wird das Einschalten der Ventileinrichtung im übernehmenden Zweig jeweils verzögert, bis durch Abschalten der Ventileinrichtung im abgebenden Zweig dessen Ventil praktisch stromlos ist. Während dieser Verzögerungszeit sind also beide Ventile gesperrt, der Strom kann dabei auf die Ventilbeschaltung im abgebenden Zweig kommutieren und die gewünschte positive Anodenspannung am abgeschalteten Ventil erzeugen.

Das Ende der Verzögerungszeit ist dadurch bestimmt, daß dem von dem Gleichstromkreis nachgelieferten Gleichstrom über den übernehmenden Zweig ein Strompfad eröffnet werden muß, damit es zu keinen Überspannungen an den Ventileinrichtungen kommt. Innerhalb dieser Grenze, die z.B. durch eine Stromüberwachung, eine Spannungsüberwachung oder eine Zeitüberwachung sichergestellt werden kann, wird also eine Pause zwischen dem Abschalten des einen Ventils und dem Einschalten des anderen Ventils eingehalten, die an sich bei herkömmlichen Stromrichtern mit eingeprägtem Gleichstrom unzulässig ist, aber gemäß der Erfindung eine erhebliche Zeit andauern kann.

Derartige Pausen sind allerdings bei Brückenschaltungen, die mit einer eingeprägten Gleichspannung arbeiten, allgemein üblich und häufig sogar erforderlich, um zu vermeiden, daß sich die Gleichspannung, die z.B. einem Zwischenkreis-Kondensator entnommen wird, kurzschlußartig entlädt, wenn das eine Ventil eingeschaltet wird und das andere Ventil seine Sperrfähigkeit noch nicht erreicht hat. Eine Überspannung, die in diesem Fall durch einen nach dem Abschalten in den wechselspannungsseitigen Induktivitäten fließenden Strom hervorgerufen werden könnte, ist dabei durch Freilaufdioden vermieden. Bei solchen Schaltungen ist das Ziel, die erforderliche Schaltpause möglichst kurz zu halten (vgl. US-PS 4 597 038), entgegengesetzt zur Aufgabe der vorliegenden Erfindung.

In FIG 2 sind die dafür vorgesehenen Einrichtungen am Beispiel eines symmetrisch sperrenden GTO mit der Ventilbeschaltung RCD und der Ansteuerschaltung AS dargestellt. Dabei erfaßt eine Zustandserfassungseinrichtung Z die Stromlosigkeit des abgeschalteten Ventils und erzeugt ein entsprechendes Zustandssignal zl. Dem Steuereingang des Ventils bzw. seiner Ansteuereinrichtung AS ist eine Freigabeeinrichtung FG vorgeschaltet, die das Einschaltsignal einer einzuschaltenden Ventileinrichtung erst freigibt, wenn die Zustandserfassung der abzuschaltenden Ventileinrichtung das die Stromlosigkeit erfassende Zustandssignal abgibt.

Im einfachsten Fall kann, wie in FIG 2 durch die unterbrochene Signalleitung 1 angedeutet ist, die Zustandserfassungseinrichtung Z des GTO's an dessen Anschlüsse angeschlossen sein, insbesondere an einem in den Ventil-Zuleitungen angeordneten Stromdetektor. Das Freigabesignal für andere Ventilzweige wird also erst dann erzeugt, wenn der erfaßte Strom durch das Ventil einen Schwellwert unterschreitet. In diesem Fall ist also an jeden Ventilzweig des Stromrichtergerätes ein eigener Stromdetektor angeschlossen. Es kann aber auch über einen entsprechenden Spannungsdetektor die Spannung an der Ventileinrichtung des stromabgebenden Zweiges erfaßt werden, um über das entsprechende Zustandssignal z1 und die Freigabeeinrichtung FG des einzuschaltenden Ventilzweiges dessen Einschalten zu verzögern, bis die erfaßte Spannung einen Schwellwert überschreitet. Dieser Schwellwert ist auf die im gesperrten Zustand maximal anliegende Sperrspannung abzustimmen, und daher relativ hoch zu wählen, so daß der Sicherheitsabstand gegenüber der zu unterdrückenden Störspannung nur klein sein kann.

In FIG 2 ist die Zustandserfassungseinrichtung Z an den Steueranschluß des GTO angeschlossen, um dessen Steuerspannung zu erfassen und das Freigabesignal erst dann zu erzeugen, wenn diese erfaßte Steuerspannung einen vorgegebenen Schwellwert erreicht.

Eine gegebenenfalls zwischen der Zustandserfassungseinrichtung Z des einen Ventils und der Freigabeeinrichtung FG anderer Ventile erforderliche Potentialtrennung kann optisch über Optokoppler OP oder Lichtwellenleiter mit Fotodioden, oder auch magnetisch erfolgen.

Die Freigabeeinrichtung sperrt das Einschaltsignal s1 des GTO's, bis die entsprechenden Zustandsignale z3, z5 der anderen Ventile der gleichen Brückenhälfte (bzw. der anderen Ventile des Stromrichtergeätes, die zur Abgabe des vom GTO zu übernehmenden Stromes fähig und bestimmt sind) die Stromlosigkeit dieser Ventile melden. Dies geschieht durch eine logische Verknüpfung, die im einfachsten Fall, daß der Einschaltzustand des Ansteuersignals s1 und der freigegebene Zustand der Signale z3 und z5 jeweils durch "1" angegeben werden, ein einfaches UND-Gatter sein kann.

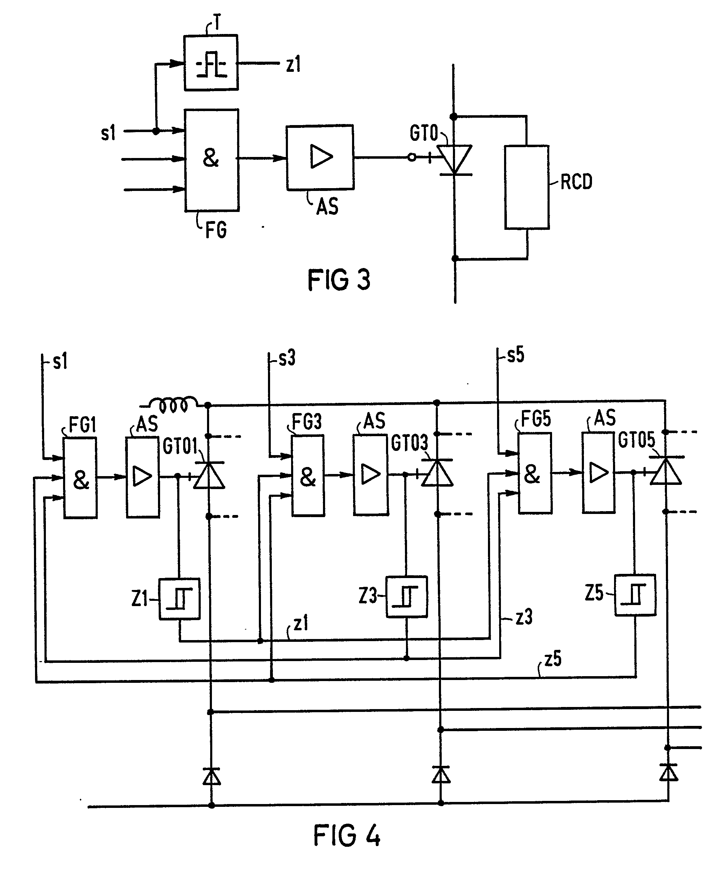

In FIG 3 ist vorgesehen, die Zustandserfassungseinrichtung an den Ansteuereingang der Ansteuerschaltung (im gezeigten Fall an dem Ansteuereingang der Freigabeschaltung FG) anzuschließen. Wird der GTO zum Abschalten seines Stromes mit dem entsprechenden Abschaltsignal ,"0" angesteuert, so wird eine Zeitstufe T angestoßen, die erst nach einer vorgegebenen Verzögerungszeit das freigebende Zustandssignal z1 = 1 erzeugt. Diese einfache Variante hat den Vorteil, daß keine Potentialtrennung erforderlich ist. Schwierigkeiten macht dagegen die Einstellung der optimalen Zeitverzögerung. Die optimale Zeitverzögerung hängt von vielen Betriebsparametern ab, wie z.B. Temperatur und Strom sowie Speicherzeit des GTO's oder auch die Laufzeiten in den Signalverarbeitungen. Daher kann es vorteilhaft sein, die Speicherzeit des Verzögerungsgliedes T in Abhängigkeit von Betriebsparametern des Stromrichtergerätes zu verändern.

Die Erfindung kann auf ganz unterschiedliche Stromrichtergeräte, z.B. Brücken mit anderen Phasenzahlen oder Pulszahlen, parallelgeschaltete Brücken oder halbgesteuerte Brücken angewendet werden. FIG 4 zeigt dies am Beispiel einer halbgesteuerten Brücke. Die gesteuerte Kommutierung des Stromes findet dabei nur in einer Brückenhälfte statt, so daß nur die Ventileinrichtungen dieser gesteuerten Brückenhälfte jeweils mit einer Freigabeeinrichtung FG 1, FG 3, FG 5 und einer entsprechenden Zustandserfassung Z1, Z3, Z5 auszurüsten sind. Das Zustandssignal für den stromlosen Zustand eines Ventils ist dabei jeweils den Eingängen der Freigabeeinrichtungen an den anderen Ventileinrichtungen aufgeschaltet. Natürlich können hier anstelle der symmetrisch sperrenden Abschaltthyristoren GTO1, GTO3, GTO5 auch andere Halbleiterventile verwendet werden. Die jeweils erforderlich Ventilbeschaltung ist in FIG 4 nicht dargestellt.

Die damit ausgestatteten Stromrichtergeräte können am Netz oder an Maschinen betrieben werden.

**Ansprüche**

1. Verfahren zum Kommutieren eines eingeprägten Stromes zwischen Ventilzweigen eines Stromrichtergerätes, das abschaltbare Ventileinrichtungen (GTO1, GTO3, GTO5) mit einer Ventilbeschaltung und mit Sperrfähigkeit in Rückwärtsrichtung aufweist, wobei die Ventileinrichtungen des stromübernehmenden Ventilzweiges beim Kommutieren eingeschaltet und die Ventileinrichtungen des stromabgebenden Zweiges stromlos werden, **dadurch gekennzeichnet, daß** das Einschalten der Ventileinrichtungen im stromübernehmenden Zweig verzögert wird, bis durch Abschalten der Ventileinrichtung im abgebenden Zweig dessen Ventil praktisch stromlos ist.

2. Verfahren nach Anspruch 1, **dadurch gekennzeichnet, daß** der Strom im abgebenden Zweig erfaßt und das Einschalten verzögert wird, bis der erfaßte Strom einen Schwellwert unterschreitet.

3. Verfahren nach Anspruch 1, **dadurch gekennzeichnet, daß** die Spannung an der Ventileinrichtung des abgebenden Zweiges erfaßt und das Einschalten verzögert wird, bis die erfaßte Spannung einen Schwellwert überschreitet.

4. Verfahren nach Anspruch 1, **dadurch gekennzeichnet, daß** die Spannung am Steuereingang der Ventileinrichtung des abgebenden Zweiges erfaßt und das Einschalten verzögert wird, bis die erfaßte Spannung einen vorgegebenen Schwellwert erreicht.

5. Verfahren nach Anspruch 1, **dadurch gekennzeichnet, daß** mit dem Steuersignal zum Abschalten des abgebenden Zweiges ein Verzögerungsglied angestoßen wird, das nach einer vorgegebenen Verzögerungszeit das Einschaltsignal des übernehmenden Gliedes freigibt.

6. Verfahren nach Anspruch 5, **dadurch gekennzeichnet, daß** die Verzögerungszeit des Verzögerungsgliedes in Abhängigkeit von Betriebsparametern des Stromrichtergerätes vorgegeben wird.

7. Stromrichtergerät für einen eingeprägten Strom mit mehreren Ventilzweigen, die je eine Ventileinrichtung mit Sperrfähigkeit in Rückwärtsrichtung, eine Ventilbeschaltung und einen Steuereingang enthalten, dem zum Abschalten ein Abschaltsignal und zum Einschalten ein Einschaltsignal zuführbar ist, **gekennzeichnet durch** eine Zustandserfassungseinrichtung (Z1, Z3, Z5), die bei einem Abschaltsignal (s1) für eine Ventileinrichtung ein die Stromlosigkeit des Ventils (GTO1) dieser Ventileinrichtung erfassendes Zustandssignal (z1) erzeugt, und eine Freigabeeinrichtung (FG1, FG3, FG5), die das Einschaltsignal der einzuschaltenden Ventileinrichtungen erst freigibt, wenn die Zustandserfassung der abzuschaltenden Ventileinrichtungen das die Stromlosigkeit erfassende Zustandssignal abgibt (FIG 4).

8. Stromrichtergerät nach Anspruch 7, **dadurch gekennzeichnet, daß** Eingänge der Zustandserfassungseinrichtung eines Ventilzweiges an einen Stromdetektor an diesem Zweig angeschlossen ist.

9. Stromrichtergerät nach Anspruch 7, **dadurch gekennzeichnet, daß** Eingänge der Zustandserfassungseinrichtung eines Ventilzweiges an einen Spannungsdetektor für den Spannungsabfall an der Ventileinrichtung angeschlossen ist.

10. Stromrichtergerät nach Anspruch 7, **dadurch gekennzeichnet, daß** Eingänge der Zustandserfassungseinrichtung einer Ventileinrichtung an den Steuereingang dieser Ventileinrichtung angeschlossen sind.

11. Vorrichtung nach Anspruch 7, **dadurch gekennzeichnet, daß** die Zustandserfassungseinrichtung einer Ventileinrichtung über eine galvanische Trennung (OP) an die Freigabeeinrichtun (FG) der anderen Ventileinrichtungen angeschlossen ist.

P 3045

FIG 1

FIG 2

P 3045

FIG 3

FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,A | US-A-4 597 038 (E.J. STACEY) <br> * Spalte 1, Zeile 25 - Zeile 35 @ Spalte 3, Zeile 4 - Zeile 7 @ Spalte 3, Zeile 49 - Zeile 54 @ Spalte 7, Zeile 1 - Zeile 31 * <br> --- | 1,3, 7, | H 02 M 7/521 <br> H 03 K 17/08 |
| A | US-A-4 342 076 (M.A. ROSSWURM ET AL) <br> * Zusammenfassung @ Spalte 2, Zeile 32 - Zeile 37 * <br> --- | 1, 2 | |
| A | GB-A-2 137 029 (F.O. JOHNSON) <br> * Zusammenfassung * <br> ----- | 1 | |
| | | | **RECHERCHIERTE SACHGEBIETE (Int. Cl.4)** <br><br> H 02 M <br> H 03 K |

Der vorliegende Recherchenbericht wurde für alle Patentansprüche erstellt

| Recherchenort | Abschlußdatum der Recherche | Prüfer |
|---|---|---|
| DEN HAAG | 25-04-1989 | MOUEZA, A.J.L. |